# FASCICULE DE BREVET EUROPEEN

(11) **EP 0 491 605 B1**
(45) Date de publication et mention de la délivrance du brevet: **07.06.1995**
(21) Numéro de dépôt: 91403383.2
(22) Date de dépôt: 13.12.1991
(51) Int. Cl.: A47J 27/21, A47J 31/54

(54) **Bouilloire électrique à chauffage amélioré**
Elektrischer Wasserkocher mit verbesserter Heizungsanlage
Electrical boiler with an improved heating system

(30) Priorité: 19.12.1990 FR 9015920
(43) Date de publication de la demande: 24.06.1992
(73) Titulaire: SEB S.A., 69130 Ecully (FR)
(72) Inventeur: Lacombe, Jacques, F-70100 Arc les Gray (FR)
(74) Mandataire: Keib, Gérard

(56) Documents cités:
- EP-A- 0 377 192
- DE-A- 2 846 339
- DE-A- 2 853 910
- DE-A- 3 802 639
- GB-A- 2 199 486

## Description

La présente invention concerne une bouilloire électrique.

Les bouilloires électriques connues comprennent un réservoir destiné à recevoir de l'eau et une résistance électrique généralement tubulaire, en acier inoxydable ou en alliage cuivreux nickelé, pour chauffer cette eau.

Cette résistance électrique est fixée près du fond de la bouilloire pour être en contact avec l'eau à chauffer. Cette disposition permet un excellent échange thermique entre la résistance et l'eau et de ce fait assure un chauffage rapide de cette dernière.

Toutefois, la présence de cette résistance chauffante près du fond de la bouilloire induit une difficulté pour nettoyer, notamment le fond de la bouilloire. En effet, cette résistance empêche l'accès aux parties du fond de la bouilloire qui sont situées sous la résistance. Ainsi, ces parties se recouvrent de dépôts tels que du calcaire qui ne peuvent être éliminés qu'avec des produits spéciaux. De même, la résistance se recouvre elle-même de dépôts calcaires qui, à la longue, affectent l'échange thermique entre la résistance et l'eau à chauffer.

Le but de la présente invention est de remédier aux inconvénients des réalisations connues en créant une bouilloire électrique qui soit facilement nettoyable tout en permettant une mise en chauffe rapide de l'eau.

L'invention vise ainsi une bouilloire électrique comprenant un récipient destiné à recevoir de l'eau et une résistance électrique pour chauffer cette eau, la résistance électrique étant liée à une plaque métallique et étant en contact avec une tubulure métallique.

Suivant l'invention, la bouilloire est caractérisée en ce que la surface de la plaque métallique, opposée à la résistance, est adjacente à l'intérieur du récipient pour être en contact avec l'eau à chauffer, les extrémités de la tubulure métallique communiquant avec l'intérieur du récipient.

Dans cette réalisation, l'eau contenue dans la tubulure est chauffée par la résistance en contact avec elle. Du fait de ce chauffage, l'eau froide est pompée du récipient par l'une des extrémités de la tubulure puis refoulée, à l'état chaud, à l'intérieur du récipient par l'autre extrémité de la tubulure.

Le dispositif de chauffage ainsi constitué fonctionne d'une manière analogue à celui de la chaudière d'une cafetière électrique, comme décrit dans le brevet GB - A - 2 199 486.

Toutefois, dans une cafetière électrique, l'eau chauffée par la chaudière n'est pas refoulée dans le récipient d'eau, mais dirigée à l'extérieur de celui-ci vers le bac à mouture. De tels dispositifs sont également décrits dans les brevets DE - A - 3 802 639 et DE - A - 2 853 910 dans lesquels le transfert de l'eau se réalise depuis un réservoir froid vers un réservoir de café par l'intermédiaire d'un filtre contenant la mouture de café.

Par ailleurs, dans une cafetière électrique, la plaque métallique de la chaudière ne sert pas à chauffer l'eau du récipient mais à maintenir au chaud le café contenu dans la verseuse qui est située sous le bac à mouture.

Au contraire, dans le cas de la présente invention, le rendement thermique de la chaudière est amélioré par rapport à celui d'une cafetière, étant donné que la plaque métallique chauffée par la résistance est en contact direct avec l'eau du récipient.

D'autre part, ce rendement thermique est encore amélioré du fait que l'eau chauffée dans la tubulure est rejetée directement de l'eau du récipient, ce qui crée une recondensation de la vapeur générée dans la tubulure qui libère de ce fait l'énergie du changement d'état dans l'eau du récipient.

De plus, le flux tournant crée par l'effet de pompe par la tubulure minimise la formation de bulles de vapeur sur la plaque métallique, ce qui limite la perte de surface d'échange thermique entre cette plaque et l'eau du réservoir.

En outre, étant donné que la résistance de chauffage n'est plus présente à l'intérieur du récipient, le nettoyage de celui-ci est très aisé.

D'ailleurs, la plaque métallique peut être recouverte d'un revêtement anti-adhésif tel que du polytétrafluoréthylène, ce qui permet de prévenir l'accrochage du calcaire sur cette plaque.

D'autres particularités et avantages de l'invention apparaîtront encore dans la description ci-après.

Aux dessins annexés donnés à titre d'exemples non limitatifs :
- la figure 1 est une vue en coupe longitudinale avec arrachement, d'une bouilloire conforme à l'invention,
- la figure 2 est une vue de dessous de la bouilloire sans son cache inférieur,
- la figure 3 est une vue en coupe suivant le plan III-III de la figure 1,
- la figure 4 est une vue en coupe suivant le plan IV-IV de la figure 3.

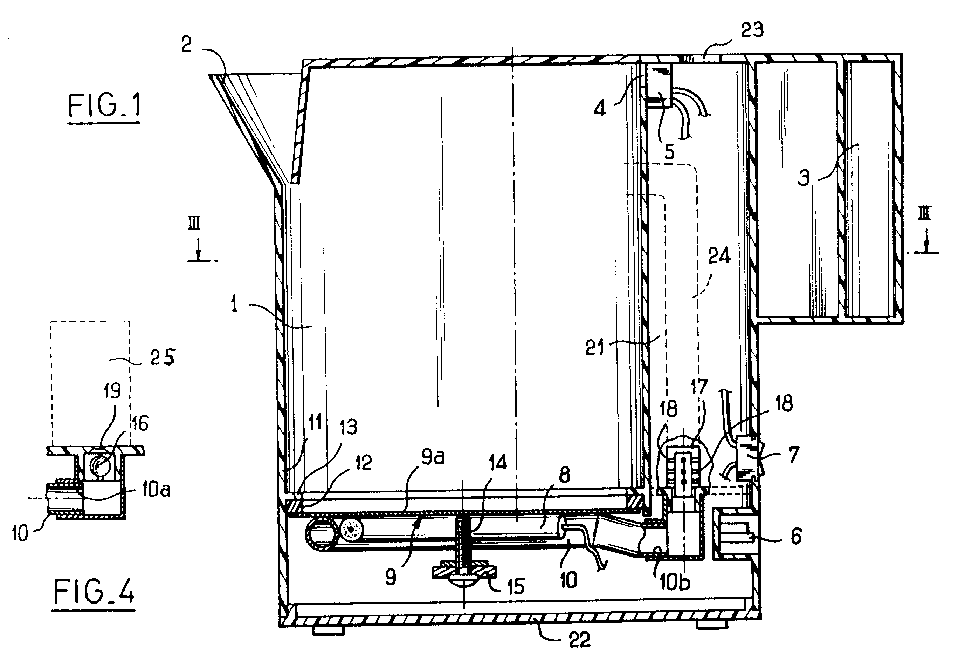

Dans la réalisation de la figure 1, la bouilloire comprend un récipient 1 destiné à contenir de l'eau, qui comporte un bec verseur 2 et une poignée 3. A la partie supérieure du récipient 1 est prévue une ouverture 4 près de laquelle est situé un organe 5 sensible à la température et dont le rôle est de couper le chauffage de la bouilloire dès que la température de l'eau atteint la valeur désirée.

La bouilloire comprend d'autre part une prise de connecteur 6 ainsi qu'un bouton marche-arrêt 7.

Conformément à l'invention, la résistance électrique 8 de chauffage de l'eau du récipient 1 est liée à une plaque métallique 9 dont la surface 9a opposée à la résistance 8 est adjacente à l'intérieur du récipient 1 pour être en contact avec l'eau à chauffer. Cette résistance 8 est en contact avec une tubulure métallique 10 dont les extrémités communiquent avec l'intérieur du récipient 1.

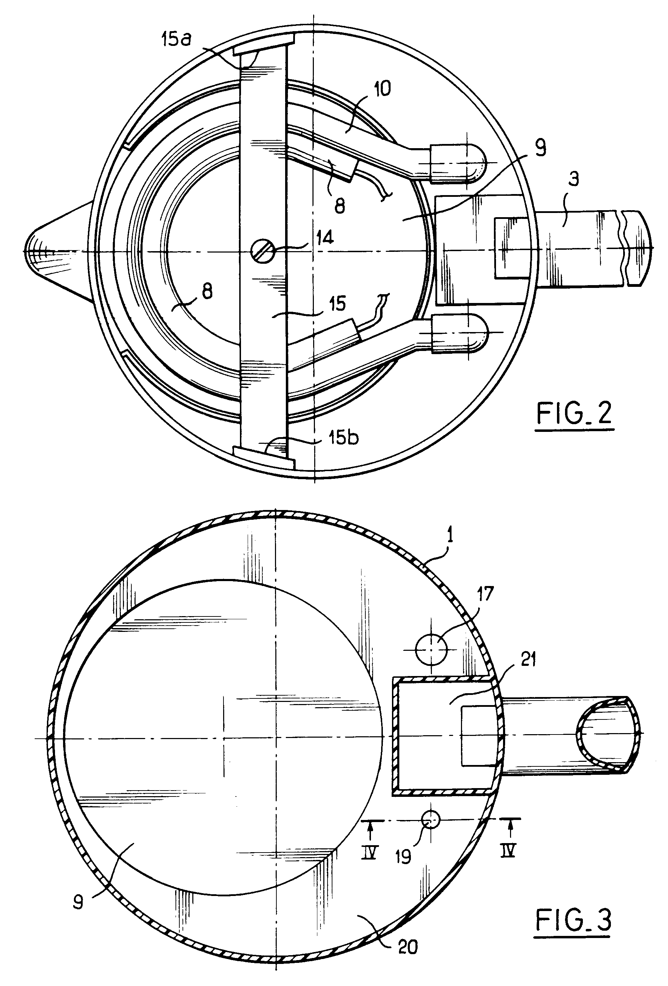

Dans la réalisation représentée, la plaque métallique 9 est fixée au fond du récipient 1. L'étanchéité entre le bord de la plaque 9 et la paroi latérale 11 du récipient 1 est assurée au moyen d'un joint annulaire 12 prenant appui contre un épaulement 13. La plaque 9 est comprimée contre le joint 12 au moyen d'une vis 14 engagée dans une bride 15 (voir figures 1 et 2) dont les extrémités 15a, 15b sont retenues à la paroi latérale 11 du récipient.

On voit notamment sur la figure 4 que l'une 10a des extrémités de la tubulure 10 communique avec l'intérieur du récipient 1 par un clapet anti-retour 16. L'autre extrémité 10b de la tubulure 10 débouche dans l'eau contenue dans le récipient 1 par une buse 17 (voir figure 1) percée de plusieurs orifices latéraux 18.

Par ailleurs, l'extrémité 10a de la tubulure 10 débouche à l'intérieur du récipient 1 par une ouverture 19 pratiquée dans le fond 20 de celui-ci (voir figures 3 et 4). L'autre extrémité 10b de cette tubulure 10 débouche à l'intérieur du récipient 1 au-dessus du fond 20 de celui-ci.

Comme indiqué sur la figure 2, la résistance 8 électrique a une forme tubulaire arquée et suit le profil également arqué de la tubulure 10, la résistance tubulaire 8 étant située à l'intérieur du profil arqué de cette tubulure 10.

La résistance 8 et la tubulure 10 peuvent être liées l'une à l'autre, ainsi qu'avec la plaque 9 par soudage de manière à réaliser un excellent échange thermique entre les différentes parties de l'ensemble.

L'ensemble constitué par la résistance 8, la tubulure 10 et la plaque métallique 9 peut être constitué par une chaudière existante actuellement utilisée dans les cafetières électriques.

Dans l'exemple représenté, l'ouverture 19 d'entrée de la tubulure 10 et la buse de sortie 17 de celle-ci, sont situées de part et d'autre d'un conduit vertical 21 (voir figures 1 et 3) qui s'étend entre le fond 20 et le haut du récipient 1. Ce conduit 21 renferme les fils de connexion entre l'organe 5 sensible à la température et le bouton de commande 7.

La figure 1 montre d'autre part, que la partie inférieure de la bouilloire est fermée par un cache 22 qui évite tout accès aux éléments chauds de la bouilloire.

Le fonctionnement de la bouilloire que l'on vient de décrire est le suivant :

Après mise en marche de la bouilloire, la résistance 8 chauffe à la fois la plaque métallique 9 et la tubulure 10 avec lesquelles elle est en contact.

Etant donné que la plaque métallique 9 est en contact avec l'eau du récipient 1, cette plaque 9 en s'échauffant, chauffe l'eau.

Par ailleurs, l'eau contenue dans la tubulure 10 chauffée par la résistance 8, est refoulée vers la buse de sortie 17 de sorte qu'elle est aspirée par l'ouverture d'entrée 19 qui interdit le refoulement vers le récipient grâce au clapet anti-retour 16.

L'eau chauffée dans la tubulure 10 est ainsi continuellement aspirée du récipient par l'ouverture d'entrée 19 et refoulée à l'état chaud sous forme de vapeur dans ce récipient par la buse de sortie 17.

Cette aspiration de l'eau et ce refoulement de l'eau sous forme de vapeur, produit au sein de l'eau, un mouvement de brassage qui élimine la formation de bulles de vapeur sur la surface 9a de la plaque 9 et maintient ainsi un excellent échange thermique entre cette dernière et l'eau du réservoir.

Ainsi, bien que la résistance 8 ne soit pas noyée dans l'eau du réservoir, cette eau s'échauffe très rapidement grâce à la combinaison des effets ci-dessus.

Par ailleurs, le rendement thermique est encore améliorée du fait que la vapeur refoulée par la buse 17 se recondense dans l'eau, de sorte qu'elle libère dans celle-ci la chaleur latente de vaporisation.

Par conséquent, le bilan thermique du chauffage de l'eau est nettement amélioré par rapport au cas d'une cafetière utilisant une chaudière du même type que celle décrite plus haut.

De plus, pour les raisons exposées ci-dessus, le bilan thermique est au moins aussi favorable que dans le cas d'une bouilloire comportant une résistance de chauffage directement noyée dans l'eau.

Compte tenu de la surface lisse qui présente la plaque 9, le nettoyage du fond de la bouilloire est extrêmement aisé. Ce nettoyage est encore plus aisé lorsque la surface 9a de la plaque 9 est recouverte d'une couche de matière anti-adhésive telle que du polytétrafluoréthylène qui prévient l'accrochage des dépôts calcaires.

La plaque 9 portant la résistance 8 et la tubulure 10 pourrait être réalisée d'une seule pièce avec le réservoir de la bouilloire.
Par ailleurs, à l'intérieur du conduit 21 et en amont de l'ouverture d'entrée d'eau 19 pourrait être disposé un filtre 25 (voir figure 4) capable d'éliminer de l'eau des composés minéraux tels que le carbonate de calcium. Dans ce cas, l'eau froide est versée dans le conduit 21 par l'ouverture 23. L'eau chaude (chauffée dans la chaudière) retourne dans le réservoir 1 par une tubulure 24 (représentée en pointillés sur la figure 1) qui débouche à la partie supérieure de ce réservoir.

## Revendications

1. Bouilloire électrique comprenant un récipient (1) destiné à recevoir de l'eau et une résistance électrique (8) pour chauffer cette eau, cette résistance électrique (8) étant liée à une plaque métallique (9) et étant en contact avec une tubulure métallique (10), caractérisée en ce que la surface (9a) de la plaque métallique (9), opposée à la résistance (8), est adjacente à l'intérieur du récipient (1) pour être en contact avec l'eau à chauffer, les extrémités de la tubulure métallique (10)communiquant avec l'intérieur du récipient (1).

2. Bouilloire électrique conforme à la revendication 1, caractérisée en ce que ladite plaque métallique (10) est fixée au fond du récipient (1).

3. Bouilloire conforme à l'une des revendications 1 ou 2, caractérisée en ce que l'une (10a) des extrémités de la tubulure (10) communique avec l'intérieur du récipient (1) par un clapet anti-retour (16), tandis que l'autre extrémité (10b) débouche dans l'eau contenue dans le récipient (1).

4. Bouilloire conforme à la revendication 3, caractérisée en ce que ladite autre extrémité (10b) de la tubulure (10) débouche dans l'eau par une buse (17) percée de plusieurs orifices (18).

5. Bouilloire conforme à l'une des revendications 1 à 4, caractérisée en ce que la surface (9a) de la plaque métallique (9) en contact avec l'eau est recouverte par un revêtement anti-adhésif.

6. Bouilloire conforme à l'une des revendications 2 à 5, caractérisée en ce que l'une (10a) des extrémités de la tubulure (10) débouche à l'intérieur du récipient (1) par une ouverture (19) pratiquée dans le fond (20) du récipient, tandis que l'autre extrémité (10b) de cette tubulure (10) débouche à l'intérieur du récipient au-dessus du fond (20) de celui-ci.

7. Bouilloire conforme à l'une des revendications 1 à 6, caractérisée en ce que la résistance électrique (8) a une forme tubulaire arquée et suit le profil également arqué de la tubulure (10).

8. Bouilloire conforme à la revendication 7, caractérisée en ce que la résistance tubulaire (8) est située à l'intérieur du profil arqué de la tubulure (10).

9. Bouilloire conforme à l'une des revendications 1 à 8, caractérisée en ce que l'entrée d'eau froide dans le réservoir (1) est précédée d'un filtre (22) pour éliminer de l'eau des composés minéraux tels que le carbonate de calcium.

## Claims

1. An electric kettle comprising a container (1) adapted to receive water and an electrical resistance (8) for heating the water, said electrical resistance (8) being connected to a metal plate (9) and being in contact with a metal conduit (10), characterised in that the surface (9a) of the metal plate (9) remote from the resistance (8) is adjacent the interior of the container (1) to be in contact with the water for heating, the ends of the metal conduit (10) communicating with the interior of the container (1).

2. An electric kettle according to claim 1, characterised in that the metal plate (10) is fixed to the base of the container (1).

3. A kettle according to claim 1 or 2, characterised in that one (10a) of the ends of the conduit (10) communicates with the interior of the container (1) via a non-return valve (16) and the other end (10b) leads into the water contained in the container (1).

4. A kettle according to claim 3, characterised in that the said other end (10b) of the conduit (10) leads into the water via a nozzle (17) formed with a plurality of apertures(18).

5. A kettle according to any one of claims 1 to 4, characterised in that the surface (9a) of the metal plate (9) in contact with the water is covered by a non-stick coating.

6. A kettle according to any one of claims 2 to 5, characterised in that one (10a) of the ends of the conduit (10) leads to the interior of the container (1) through an opening (19) formed in the base (20) of the container, while the other end (10b) of said conduit (10) leads to the interior of the container above the base (20) thereof.

7. A kettle according to any one of claims 1 to 6, characterised in that the electrical resistance (8) is of arcuate shape and follows the likewise arcuate profile of the conduit (10).

8. A kettle according to claim 7, characterised in that the tubular resistance (8) is situated inside the arcuate profile of the conduit (10).

9. A kettle according to any one of claims 1 to 8, characterised in that the cold water inlet to the reservoir (1) is preceded by a filter (22) to eliminate mineral compounds, such as calcium carbonate, from the water.

## Patentansprüche

1. Elektrischer Wasserkocher mit einem Behälter (1) zur Aufnahme von Wasser und einem elektrischen Widerstand (8) zum Erhitzen dieses Wassers, wobei dieser elektrische Widerstand (8) mit einer Metallplatte (9) verbunden ist und mit einem Metallrohrstutzen (10) in Kontakt steht, dadurch gekennzeichnet, daß die dem Widerstand gegenüberliegende Fläche (9a) der Metallplatte (9) an den Innenraum des Behälters (1) angrenzt, damit sie mit dem zu erhitzenden Wasser in Kontakt steht, wobei die Enden des Metallrohrstutzens (10) mit dem Innenraum des Behälters (1) in Verbindung stehen.

2. Elektrischer Wasserkocher nach Anspruch 1, dadurch gekennzeichnet, daß die Metallplatte (10) am Boden des Behälters (1) befestigt ist.

3. Wasserkocher nach einem der Ansprüche 1 bis 2, dadurch gekennzeichnet, daß eines (10a) der Enden des Rohrstutzens (10) mit dem Innenraum des Behälters (1) über ein Rückschlagventil (16) in Verbindung steht, während das andere Ende (10b) in das in dem Behälter (1) enthaltene Wasser mündet.

4. Wasserkocher nach Anspruch 3, dadurch gekennzeichnet, daß das andere Ende (10b) des Rohrstutzens (10) über eine Düse (17) in das Wasser mündet, die von mehreren Öffnungen (18) durchbrochen ist.

5. Wasserkocher nach einem der Ansprüche 1 bis 4, dadurch gekennzeichnet, daß die mit dem Wasser in Kontakt stehende Fläche (9a) der Metallplatte (9) mit einem Anti-Haftüberzug beschichtet ist.

6. Wasserkocher nach einem der Ansprüche 2 bis 5, dadurch gekennzeichnet, daß eines (10a) der Enden des Rohrstutzens (10) über eine Öffnung (19) in den Innenraum des Behälters (1) mündet, die im Boden (20) des Behälters vorgesehen ist, während das andere Ende (10b) des Rohrstutzens (10) in den Innenraum des Behälters über dessen Boden (20) mündet.

7. Wasserkocher nach einem der Ansprüche 1 bis 6, dadurch gekennzeichnet, daß der elektrische Widerstand (8) eine rohrförmige, gekrümmte Gestalt aufweist und dem ebenfalls gekrümmten Profil des Rohrstutzens (10) folgt.

8. Wasserkocher nach Anspruch 7, dadurch gekennzeichnet, daß sich der rohrförmige Widerstand (8) im Inneren des gekrümmten Profils des Rohrstutzens (10) befindet.

9. Wasserkocher nach einem der Ansprüche 1 bis 8, dadurch gekennzeichnet, daß vor dem Kaltwassereinlauf in den Behälter (1) ein Filter (22) liegt, um mineralische Verbindungen wie Calciumcarbonat aus dem Wasser zu entfernen.
